# EUROPÄISCHE PATENTSCHRIFT

(11) **EP 2 708 411 B1**
(45) Veröffentlichungstag und Bekanntmachung des Hinweises auf die Patenterteilung: **02.03.2016**
(21) Anmeldenummer: 13184412.8
(22) Anmeldetag: 13.09.2013
(51) Int. Cl.: B60N 2/68, B60N 2/22, B60N 2/46

(54) **SITZ, INSBESONDERE FAHRZEUGSITZ, MIT SCHWENKACHSE**
SEAT, IN PARTICULAR A VEHICLE SEAT, WITH PIVOT AXIS
SIÈGE, NOTAMMENT SIÈGE DE VÉHICULE, DOTÉ D'UN AXE DE PIVOTEMENT

(30) Priorität: 14.09.2012 DE 102012108640
(43) Veröffentlichungstag der Anmeldung: 19.03.2014
(73) Patentinhaber: GRAMMER AG, 92224 Amberg (DE)
(72) Erfinder: Schulz, Christian, 38704 Liebenburg (DE)
(74) Vertreter: Hannke, Christian

(56) Entgegenhaltungen:
- EP-A1- 1 728 673
- EP-A1- 2 123 194
- WO-A1-2008/015527
- WO-A1-2008/057036
- DE-A1- 1 900 079
- US-A1- 2005 168 041
- US-A1- 2007 236 061

## Beschreibung

Die Erfindung betrifft einen Sitz, insbesondere einen Fahrzeugsitz, mit einem Sitzteil, welches eine Sitzfläche aufweist und gegenüber einer Bodenfläche im Bereich der Sitzvorderseite abgestützt ist, mit einer Rückenlehne, die mit dem Sitzteil mittels einer Schwenkachse schwenkbar verbunden ist, und gegebenenfalls mit mindestens einer Armlehne gemäß dem Oberbegriff des Patentanspruches 1.

Sitze, insbesondere Fahrzeugsitze sind in vielfältiger Weise bekannt. Herkömmlicherweise weisen derartige Sitze, sofern die Rückenlehne gegenüber dem Sitzteil, auf dem die den Sitz benutzende Person sitzt, verschwenkt werden kann, eine Schwenkachse auf, die eine Schwenkung zwischen der Rückenlehne und dem Sitzteil ermöglicht. Hierbei ist die Rückenlehne mit einem unteren Ende schwenkbar an dem Sitzteil befestigt und kann gegenüber dem Sitzteil in Sitzvorwärts- und Sitzrückwärtsrichtung nach vorne oder nach hinten geschwenkt werden, um einen entsprechenden Sitzcomfort der den Sitz benutzenden Person zur Verfügung zu stellen.

Die Schwenkachse ist bei den bisherigen Sitzen, insbesondere bei den bisherigen Fahrzeugsitzen, üblicherweise am hinteren und unteren Bereich des Sitzteiles, welches beispielsweise einen Sitzteilrahmen aufweisen kann, angeordnet. Möglicherweise ist eine möglichst tiefe Anordnung dieser Schwenkachse an dem Sitzteil gewünscht, so dass ein fließender Übergang von der Sitzpolsteroberfläche bzw. Sitzoberfläche zu der Oberfläche des Rückenlehnenpolsters auch bei verschwenktem Zustand der Rückenlehne vorhanden ist.

Dies bedeutet, dass derartige Schwenkachsen unterhalb der Sitzoberfläche bzw. Sitzpolsteroberfläche angeordnet sind.

Ebenso bekannt sind Sitze, insbesondere Fahrzeugsitze, die Armlehnen aufweisen, welche üblicherweise links- und/oder rechtsseitig an der Rückenlehne befestigt sind. Derartige Armlehnen können derart schwenkbar ausgebildet sein, dass sie nach oben und nach unten geschwenkt werden können, um beispielsweise bei Bussitzen das seitliche Ein- und Aussteigen zu erleichtern. Diese Armlehnen sind demzufolge aufgrund einer gewünschten Mindesthöhe für diese Armlehne häufig an der Rückenlehne direkt befestigt.

Alternativ können derartige Armlehnen über ein winkelig ausgebildetes Verbindungselement am darunterliegenden Sitzteil befestigt sein, so dass ein erster Abschnitt des Verbindungselementes von dem Sitzteil an den Seiten des Fahrzeugsitzes nach oben verlaufend und ein zweiter Anteil des Verbindungselementes zur Vorderseite des Fahrzeugsitzes hin verlaufend vorhanden ist.

Derartige Sitze fordern die separate Anbringung von Armlehnen mittels weiterer Bauteile an den Seiten der Rückenlehne oder an den Seiten des Sitzteiles.

Weiterhin ist aus der DE1900079 A1 ein Sitz mit den Merkmalen des Oberbegriffs vom Anspruch 1 bekannt.

Demzufolge ist es Aufgabe der Erfindung, einen Sitz, insbesondere einen Fahrzeugsitz, zur Verfügung zu stellen, der ein Sitzteil, eine Rückenlehne und eine Armlehne aufweist und einen einfachen Aufbau wiedergibt und somit kostengünstig herstellbar ist.

Diese Aufgabe wird gemäß den Merkmalen des Patentanspruches 1 gelöst.

Ein wesentlicher Punkt der Erfindung liegt darin, dass bei einem Sitz, insbesondere einem Fahrzeugsitz, mit einem Sitzteil, welches eine Sitzfläche aufweist und gegenüber einer Bodenfläche im Bereich der Sitzvorderseite abgestützt ist, mit einer Rückenlehne, die mit dem Sitzteil mittels einer Schwenkachse schwenkbar verbunden ist, und mit mindestens einer Armlehne, die drei vorgenannten Teile, nämlich das Sitzteil, die Rückenlehne und die Armlehne mittels der Schwenkachse miteinander verbunden sind.

Dies bedeutet, dass an der gemeinsamen Schwenkachse für die Schwenkbewegung der Rückenlehne gegenüber dem Sitzteil ebenso die Armlehnen angeordnet sind, wobei sich die Armlehnen ausschließlich in Sitzvorwärtsrichtung von der Rückenlehne ausgehend von hinten nach vorne erstrecken, also keine winkelartige Ausbildung aufweisen. Hieraus ergibt sich ein Aufbau des Sitzes, insbesondere des Fahrzeugsitzes, der sich dadurch auszeichnet, dass die Schwenkachse für das Verschwenken der Rückenlehne gegenüber dem Sitzteil der bisher bekannten Sitze, insbesondere Fahrzeugsitze, relativ weit oben angeordnet ist, also auf Höhe der Armlehnen.

Somit ist die Schwenkachse oberhalb einer Sitzoberfläche des Sitzteiles und im rückwärtigen Teil des Sitzteiles in Sitzbreitenrichtung verlaufend angeordnet.

Um eine derartige Anordnung der Schwenkachse unter Beibehaltung eines hohen Sitzcomforts für die den Sitz benutzende Person selbst bei verschwenkter Rückenlehne zu ermöglichen, weist das Sitzteil einen, vorzugsweise einstückig ausgebildeten, Sitzteilrahmen mit jeweils einem links- und rechtsseitig, sich seitlich an der Rückenlehne bis in den Bereich der Schwenkachse nach oben erstreckenden Anteil auf. Hierbei ist die Schwenkachse vorzugsweise an dem Sitzteil fixiert, so dass sich um diese Schwenkachse die Rückenlehne und die Armlehne bzw. die Armlehnen, sofern sie beidseitig des Sitzes angeordnet sind, schwenken lassen.

Zudem weist für eine derartige Sitzkonstruktion die Rückenlehne ein unteres, gegenüber der Bodenfläche abgestütztes Ende auf, welches sich bis oder nahezu bis zur Bodenfläche erstreckt. Dies bedeutet, dass das untere Ende der Rückenlehne mindestens ein im Bereich der Sitzrückseite angeordnetes Abstützelement zur Abstützung des Sitzes gegenüber der Bodenfläche darstellt, wobei dieses Abstützelement, vorzugsweise diese zwei Abstützelemente, also ein links- und ein rechtsseitig angeordnetes Abstützelement, einstückig mit einem Rückenlehnenrahmen der Rückenlehne ausgebildet sind. Hierfür ist die Rückenlehne biegesteif und in Höhenrichtung von einem oberen Ende bis zu dem unteren Ende durchgehend zumindest hinsichtlich des Rückenlehnenrahmens ausgebildet. Dies bedeutet, dass der Sitz im rückwärtigen Bereich auf den Abstützelementen der Rückenlehne abgestützt bzw. abgestellt ist und im vorderseitigen Bereich auf ähnlichen Abstützelementen des Sitzteiles abgestützt bzw. abgestellt ist.

Erfindungsgemäß hat ein derartiger Sitz als einzige wirkliche Verbindung zwischen dem Sitzteil und der Rückenlehne die Schwenkachse, welche den Gesamtaufbau des Sitzes, insbesondere des Fahrzeugsitzes, erheblich vereinfacht. Damit ist die Rückenlehne nicht mehr als separates Bauteil an dem Sitzteil befestigt, sondern die Rückenlehne stellt einen eigenständigen Standfuß des Sitzes für den hinteren Bereich ebenso wie das Sitzteil für den vorderen Bereich dar.

Da nun die Schwenkachse durch eine derartige Ausbildung der Rückenlehne und des Sitzteiles relativ weit oben gegenüber der Sitzoberfläche angeordnet ist, können vorteilhaft auch die Armlehnen links- und rechtsseitig an dieser Schwenkachse befestigt werden, woraus sich nochmals ein vereinfachter Gesamtaufbau des Fahrzeugsitzes ergibt.

Ein gutes Kräfte- und Krafthebelarmverhältnis der ober- und unterhalb der Schwenkachse liegenden Anteile der Rückenlehne, die direkt oder indirekt gegenüber der Bodenfläche, wie beispielsweise einer Karosseriebodenfläche, abgestützt ist, ergibt sich dadurch, dass ein Längenverhältnis von einer ersten Länge, die sich von dem oberen Ende der Rückenlehne bis zu der Schwenkachse erstreckt, zu einer zweiten Länge, die sich von dem unteren Ende der Rückenlehne bis zu der Schwenkachse erstreckt, in einem Bereich von 1 : 1 bis 3 : 1, bevorzugt in einem Bereich von 1,8 : 1 bis 2,2 : 1 liegt.

Als geeignetes Material für derartige erfindungsgemäße Fahrzeugsitze, die zusätzlich zu dem einfachen Gesamtaufbau auch leicht sein sollen, haben sich Kunststoffe, GFK-Faser verstärkte oder CFK-Faser verstärkte Materialien ergeben. Mögliche Fasern sind auch Flachs, Aramidbasalt und ähnliche Fasern. Mögliche Kunststoffe sind beispielsweise Thermoplaste oder Duroplaste.

Davon ausgenommen sind Polsteranteile für das Sitzteil und die Rückenlehne, so dass vorzugsweise Sitzteilrahmen, Rückenlehnenrahmen und Armlehnenrahmen aus derartigen Materialien gebildet sind.

Gemäß einer bevorzugten Ausführungsform weist der erfindungsgemäße Sitz zusätzlich eine Kurvenbahneinrichtung zum Gleiten des Abstützfußelementes entlang einer Kurvenbahn bei Durchführung einer Schwenkbewegung der Rückenlehne gegenüber dem Sitzteil in Sitzvorwärts- und Rückwärtsrichtung auf. Diese Kurvenbahneinrichtung ist also am unteren Ende der Rückenlehne angeordnet und mit der Bodenfläche bzw. der Karosseriebodenfläche verbunden.

Zusätzlich kann eine derartige Kurvenbahneinrichtung eine Arretierungseinrichtung zum Arretieren des entlang der Kurvenbahn gleitenden Abstützfußelementes gegenüber der Kurvenbahn aufweisen. Auf diese Weise kann die Rückenlehne in verschiedenen Schwenkstellungen mittels der Arretierungseinrichtung und der Kurvenbahneinrichtung fixiert werden. Da eine derartige Arretierungseinrichtung am unteren Ende der Rückenlehne angeordnet ist und somit einen relativ großen Abstand, also einen großen Krafthebelarm, zu der Schwenkachse, die relativ weit oben angeordnet ist, aufweist, ist es möglich, dass die Rückenlehne mit wenig Krafteinwirkung mittels der Arretierungseinrichtung fixiert wird. Dies bedeutet, dass gegenüber den herkömmlichen Fahrzeugsitzen, die eine große Kraftaufnahme im Schwenkachsenbereich und dem Arretierungsbereich, der im Bereich der Schwenkachse vorhanden ist, aufweisen, eine geringe Kraft-Drehmoment-Beaufschlagung im Bereich der Schwenkachse und auch im Bereich der Arretierungseinrichtung sowie der Kurvenbahneinrichtung vorhanden ist.

Vorteile und Zweckmäßigkeiten sind der nachfolgenden Beschreibung zu entnehmen.

Hierbei zeigen:
- Fig. 1: in einer schematischen perspektivischen Darstellung einen Fahrzeugsitz gemäß einer Ausführungsform der Erfindung;
- Fig. 2a, 2b: in einer Seitendarstellung einen schematisch dargestellten Fahrzeugsitz gemäß der Ausführungsform der Erfindung mit einer verschwenkten und unverschwenkten Rückenlehne; und
- Fig. 3: in einer Seitendarstellung den erfindungsgemäßen Fahrzeugsitz mit eingezeichneten Krafthebelarmen.

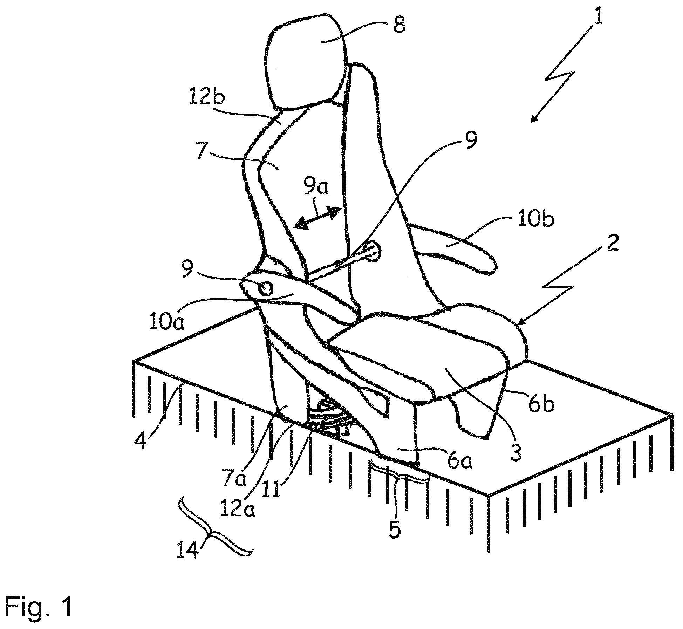

In Fig. 1 ist in einer perspektivischen schematischen Darstellung der Fahrzeugsitz gemäß einer Ausführungsform der Erfindung gezeigt. Der Fahrzeugsitz 1 weist hier kein Rückenlehnenpolster auf und ist mit einem Sitzteilpolster ausgestattet. Das Sitzteil 2 ist somit mit dem Sitzteilpolster 3 belegt.

Der Fahrzeugsitz ist auf einer Bodenfläche 4, die beispielsweise ein Karroserieboden eines Fahrzeuges darstellen kann, abgestellt.

In einem fahrzeugsitzvorderseitigen Bereich 5 ist das Sitzteil 2 gegenüber der Bodenfläche 4 abgestützt, und zwar mittels Abstützelementen oder Füßen 6a, 6b.

In einem fahrzeugrückseitigen Bereich 14 ist der Fahrzeugsitz mit Abstützfußelementen 7a der Rückenlehne 7 gegenüber der Bodenfläche 4 abgestützt bzw. darauf abgestellt.

Bei einer Kurvenbahneinrichtung 11 kann die Rückenlehne 7 im Bereich ihrer Abstützfußelemente 7a nach vorne und nach hinten verschwenkt werden, so dass eine Drehung um eine Schwenkachse 9 stattfindet und somit die Rückenlehne 7 in ihrem oberen Bereich nach hinten oder nach vorne verschwenkt wird.

Diese Kurvenbahneinrichtung 11 kann an dem links- und/oder rechtsseitigen Abstützelement 7a der Rückenlehne 7 angebracht sein.

Die gemeinsame Schwenkachse 9 ist vorzugsweise an dem Sitzteil 2 fixiert. An der Schwenkachse 9 ist die Rückenlehne 7 schwenkend derart aufgehängt, dass die Rückenlehne sich nach vorne und nach hinten bezüglich der Fahrzeugsitzlängsrichtung verschwenken lässt. Zusätzlich sind Armlehnen 10a und 10b links- und rechtsseitig an dieser Schwenkachse 9 angebracht und lassen sich ebenso nach oben und nach unten um die Schwenkachse 9 herum schwenken.

Die Schwenkachse 9 bildet somit die einzige wirkliche Verbindung zwischen der Rückenlehne 7 und dem Sitzteil 2, sowie den Armlehnen 10a und 10b. Die Schwenkachse 9 erstreckt sich in Sitzbreitenrichtung 9a.

Die Rückenlehne selbst erstreckt sich von einem oberen Ende 12b bis zu einem unteren Ende 12a, wobei das untere Ende 12a auf der Bodenfläche abgestellt oder beispielsweise mittels der Kurvenbahneinrichtung 11 gegenüber der Bodenfläche abgestützt ist.

Schließlich kann die Rückenlehne 7 oberseitig eine Kopfstütze 8 aufweisen.

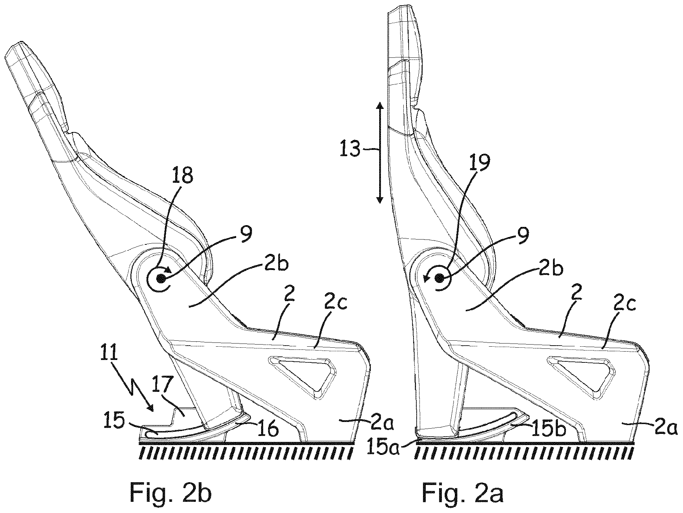

In Fig. 2a und 2b ist in zwei Seitendarstellungen der erfindungsgemäße Fahrzeugsitz in einer unverschwenkten und in einer verschwenkten Darstellung wiedergegeben. Der Fahrzeugsitz umfasst wiederum das Sitzteil 2, welches als Sitzteilrahmen vorhanden sein kann.

Dieser Sitzteilrahmen läuft oberseitig in links- und rechtsseitig angeordneten nach oben verlaufenden Anteilen 2b aus, wobei diese Anteile 2b bis in den Bereich der Schwenkachse 9 verlaufen, also eine für das Anbringen von Armlehnen 10a und 10b übliche Höhe. Diese Anteile 2b bilden somit einen fixierten Halt für die Schwenkachse 9 und umfassen die Rückenlehne 7 links- und rechtsseitig.

Sobald eine Drehung der Rückenlehne 7 um die Schwenkachse 9 gemäß dem Pfeil 19 erfolgt, findet ein Verschwenken der Rückenlehne nach hinten zumindest in ihrem oberen Teil statt, wie es in Fig. 2b wiedergegeben ist. Ein Zurückverschwenken findet gemäß dem Pfeil 18 statt.

Diesen beiden Darstellungen ist deutlich zu entnehmen, dass die Rückenlehne 7 sich in Höhenrichtung 13 durchgehend erstreckt, also bei einer Verschwenkung der Rückenlehne um die Schwenkachse 9 in ihrem unteren Bereich bzw. an ihrem unteren Ende 12a nach vorne schwenkt, während sie in ihrem oberen Bereich nach hinten schwenkt.

Bei dem Schwenken nach vorne des unteren Endes 12a findet eine Führung des Abstützfußelementes innerhalb der Kurvenbahn 15, 16 statt. Die Kurvenbahn 15 bildet eine kurvenförmige bzw. bogenförmige Ausnehmung bzw. Nut innerhalb des Bauteiles 17, welches fest mit der Bodenfläche 4 verbunden ist. Innerhalb dieser Nut 15 können beispielsweise ein oder mehrere Zapfen, die hier nicht näher dargestellt sind und die seitlich an dem Abstützfußelement 7a angeordnet sind, gleitend bewegt werden. Zugleich gleitet das untere Ende 12a der Rückenlehne 7 auf einer kurvenförmigen bzw. bogenförmigen Bahn 16, um die nötigen Abstützgegenkräfte von Seiten der Bodenfläche 4 aus zu gewährleisten.

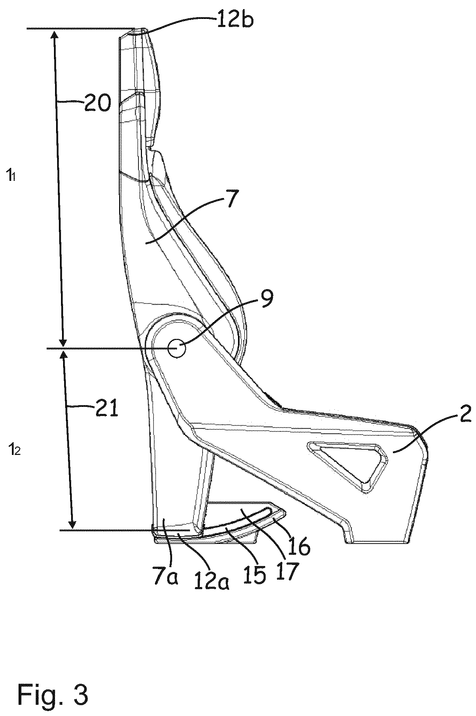

In Fig. 3 sind nochmals in einer Seitendarstellung die Hebelverhältnisse bzw. die Kraftverhältnisse in Bezug auf die Schwenkachse 9 des erfindungsgemäßen Fahrzeugsitzes wiedergegeben. Dieser Darstellung ist zu entnehmen, dass ein erster Krafthebelarm 20, der sich von der Schwenkachse 9 bis zu dem oberen Ende 12b der Rückenlehne erstreckt, in einem bestimmten Verhältnis zu einem zweiten Krafthebelarm 21, der sich von der Schwenkachse 9 bis zu dem unteren Ende 12a der Rückenlehne 7 erstreckt, besteht.

Idealerweise ist dieses Kraft-Hebelarm-Verhältnis derart ausgebildet, dass die Schwenkachse 9 und damit die Anteile 2b des Sitzteilrahmens sowie Durchgangsöffnungen an der Rückenlehne 7 auf einer Höhe angeordnet sind, die ein optimales Kraftverhältnis auch im unteren Bereich der Kurvenbahneinrichtung 11 zulässt, um mit möglichst wenig Kraft das untere Ende 12a der Rückenlehne 7 mittels einer hier nicht näher dargestellten Arretierungseinrichtung arretieren bzw. fixieren zu können.

Diese Fixierung bezieht sich auf eine bestimmte Schwenkstellung der Rückenlehne 7.

Bevorzugt ist das Längenverhältnis von der ersten Länge 20, die sich von dem oberen Ende 12b der Rückenlehne 7 bis zu der Schwenkachse 9 erstreckt, zu der zweiten Länge 21, die sich von dem unteren Ende 12a der Rückenlehne 7 bis zu der Schwenkachse 9 erstreckt, in einem Bereich von 1 : 1 bis 3 : 1, bevorzugt in einem Bereich von 1,8 : 1 bis 2,2 : 1.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil(rahmen)
- 2a: Sitzteilrahmen
- 2b: Anteile/Sitzteilrahmen
- 3: Sitzteilpolster/Sitzfläche
- 4: Bodenfläche
- 5: fahrzeugsitzvorderseitiger Bereich/Sitzvorderseite
- 6a: Abstützelement/Fuß
- 6b: Abstützelement/Fuß
- 7: Rückenlehne
- 8: Kopfstütze
- 7a: Abstützfußelement
- 9: Schwenkachse
- 10a: Armlehne
- 10b: Armlehne
- 11: Kurvenbahneinrichtung
- 12a: unteres Ende/abgestütztes Ende
- 12b: oberes Ende
- 13: Höhenrichtung
- 14: fahrzeugrückseitiger Bereich/rückwärtiger Bereich
- 15: Kurvenbahn/Nut
- 16: Kurvenbahn/kurvenförmige bzw. bogenförmige Bahn
- 18: Schwenkbewegung
- 19: Pfeil/Schwenkbewegung
- 20: erster Krafthebelarm
- 21: zweiter Krafthebelarm/zweite Länge

## Patentansprüche

1. Sitz, insbesondere Fahrzeugsitz, mit einem Sitzteil (2), welches eine Sitzfläche (3) aufweist und gegenüber einer Bodenfläche (4) im Bereich der Sitzvorderseite (5) abgestützt ist, mit einer Rückenlehne (7), die mit dem Sitzteil (2) mittels einer Schwenkachse (9) schwenkbar verbunden ist, und mit mindestens einer Armlehne (10a, 10b), wobei das Sitzteil (2), die Rückenlehne (7) und die Armlehne (10a, 10b) mittels der gemeinsamen Schwenkachse (9) miteinander verbunden sind, **dadurch gekennzeichnet, dass** die Schwenkachse (9) oberhalb einer Sitzoberfläche (2c) des Sitzteiles (2) und dem rückwärtigen Bereich (14) des Sitzteiles (2) in Sitzbreitenrichtung (9a) verlaufend angeordnet ist.

2. Sitz nach Anspruch 1,
**dadurch gekennzeichnet, dass**
das Sitzteil (2) einen, vorzugsweise einstückig ausgebildeten, Sitzteilrahmen (2, 2a, 2b) mit jeweils einem links- und rechtsseitig, sich seitlich an der Rückenlehne (7) bis in den Bereich der Schwenkachse (9) nach oben erstreckenden Anteil (2b) aufweist.

3. Sitz nach einem der vorangegangenen Ansprüche,
**dadurch gekennzeichnet, dass**
die Schwenkachse (9) am Sitzteil (2) fixiert ist.

4. Sitz nach einem der vorangegangenen Ansprüche,
**dadurch gekennzeichnet, dass**
die Rückenlehne (7) mindestens ein unteres, gegenüber der Bodenfläche (4) abgestütztes Ende (12a), welches sich bis oder nahezu bis zur Bodenfläche (4) erstreckt, aufweist.

5. Sitz nach Anspruch 4,
**dadurch gekennzeichnet, dass**
das untere Ende (12a) der Rückenlehne (7) mindestens ein im Bereich der Sitzrückseite (14) angeordnetes Abstützfußelement (7a) zur Abstützung des Sitzes (1) gegenüber der Bodenfläche (4) darstellt.

6. Sitz nach Anspruch 4 oder 5,
**dadurch gekennzeichnet, dass**
die Rückenlehne (7) biegesteif und in Höhenrichtung (13) von einem oberen Ende (12b) bis zu dem unteren Ende (12a) durchgehend ausgebildet ist.

7. Sitz nach einem der Ansprüche 4 - 6,
**dadurch gekennzeichnet, dass**
ein Längenverhältnis von einer ersten Länge (20), die sich von dem oberen Ende (12b) der Rückenlehne (7) bis zu der Schwenkachse (9) erstreckt, zu einer zweiten Länge (21), die sich von dem unteren Ende (12a) der Rückenlehne (7) bis zu der Schwenkachse (9) erstreckt, in einem Bereich von 1 : 1 bis 3 : 1, bevorzugt in einem Bereich von 1,8 : 1 bis 2,2 : 1 liegt.

8. Sitz nach einem der vorangegangenen Ansprüche,
**dadurch gekennzeichnet, dass**
ein Sitzteilrahmen, ein Rückenlehnenrahmen und ein Armlehnenrahmen jeweils, vorzugsweise einstückig, aus Kunststoff mit oder ohne Faserverstärkung ausgebildet ist.

9. Sitz nach einem der Ansprüche 5 - 8,
**dadurch gekennzeichnet, dass**
das Abstützfußelement (7a) mit einer Kurvenbahneinrichtung (11) zum Gleiten des Abstützfußelementes (7a) entlang einer Kurvenbahn (15, 16) bei Durchführung einer Schwenkbewegung (18, 19) der Rückenlehne (7) gegenüber dem Sitzteil (2) in Sitzvorwärts- und Rückwärtsrichtung verbunden ist.

10. Sitz nach Anspruch 9,
**dadurch gekennzeichnet, dass**
dass die Kurvenbahneinrichtung (11) eine Arretierungseinrichtung zum Arretieren des entlang der Kurvenbahn (15, 16) gleitenden Abstützfußelementes (7a) gegenüber der Kurvenbahn (15, 16) aufweist.

## Claims

1. Seat, in particular a vehicle seat, comprising a seat part (2), which has a seat area (3) and is supported relative to a floor (4) in the region of the front side (5) of the seat, comprising a backrest (7) which is pivotally connected to the seat part (2) by means of a pivot axis (9), and comprising at least one armrest (10a, 10b),
the seat part (2), the backrest (7) and the armrest (10a, 10b) being interconnected by means of the common pivot axis (9), **characterised in that** the pivot axis (9) is arranged so as to extend over a seat surface (2c) of the seat part (2) and the rear region (14) of the seat part (2) in the width direction (9a) of the seat.

2. Seat according to claim 1,
**characterised in that**
the seat part (2) comprises a seat-part frame (2, 2a, 2b), preferably formed as one piece, comprising a portion (2b) which extends upwards into the region of the pivot axis (9) at the side of the backrest (7) on the left-hand side and the right-hand side respectively.

3. Seat according to either of the preceding claims,
**characterised in that**
the pivot axis (9) is fixed to the seat part (2).

4. Seat according to any of the preceding claims,
**characterised in that**
the backrest (7) comprises at least one lower end (12a) which is supported relative to the floor (4) and extends as far as or almost as far as the floor (4).

5. Seat according to claim 4,
**characterised in that**
the lower end (12a) of the backrest (7) constitutes at least one support foot element (7a) arranged in the region of the rear (14) of the seat in order to support the seat (1) relative to the floor (4).

6. Seat according to either claim 4 or claim 5,
**characterised in that**
the backrest (7) is formed so as to be rigid and to be continuous in the height direction (13) from an upper end (12b) to the lower end (12a).

7. Seat according to any of claims 4 to 6,
**characterised in that**
a length ratio of a first length (20), which extends from the upper end (12b) of the backrest (7) to the pivot axis (9), to a second length (21), which extends from the lower end (12a) of the backrest (7) to the pivot axis (9), is in a range of from 1:1 to 3:1, preferably in a range of from 1.8:1 to 2.2:1.

8. Seat according to any of the preceding claims,
**characterised in that**
a seat-part frame, a backrest frame and an armrest frame are each formed, preferably in one piece, of plastics material which either is or is not fibre-reinforced.

9. Seat according to any of claims 5 to 8,
**characterised in that**
the support foot element (7a) is connected to a curved path device (11) for sliding the support foot element (7a) along a curved path (15, 16) when carrying out a pivoting movement (18, 19) of the backrest (7) relative to the seat part (2) in the forward direction and backward direction of the seat.

10. Seat according to claim 9,
**characterised in that**
the curved path device (11) comprises a locking means for locking the support foot element (7a), that slides along the curved path (15, 16), relative to the curved path (15, 16).

## Revendications

1. Siège, notamment siège de véhicule, avec une partie d'assise (2), qui comprend une superficie d'assise (3) et qui est appuyé contre une surface de sol (4) au niveau de l'avant du siège (5), avec un dossier (7) qui est relié de manière pivotante avec la partie d'assise (2) au moyen d'un axe de pivotement (9) et avec au moins un accoudoir (10a, 10b), la partie d'assise (2), le dossier (7) et l'accoudoir (10a, 10b) étant reliés entre eux au moyen de l'axe de pivotement (9) commun, **caractérisé en ce que** l'axe de pivotement (9) se trouve au-dessus d'une surface d'assise (2c) de la partie d'assise (2) et de la zone arrière (14) de la partie d'assise (2) et s'étend dans la direction de la largeur du siège (9a).

2. Siège selon la revendication 1, **caractérisé en ce que** la partie d'assise (2) comprend un cadre de partie d'assise (2, 2a, 2b) formé de préférence en une pièce avec une partie (2b) s'étendant respectivement du côté gauche et du côté droit, latéralement sur le dossier (7) jusqu'au niveau de l'axe de pivotement (9) vers le haut.

3. Siège selon l'une des revendications précédentes, **caractérisé en ce que** l'axe de pivotement (9) est fixé à la partie d'assise (2).

4. Siège selon l'une des revendications précédentes, **caractérisé en ce que** le dossier (7) comprend au moins une extrémité inférieure (12a) appuyée contre la surface de sol (4), qui s'étend jusqu'à ou presque jusqu'à la surface de sol (4).

5. Siège selon la revendication 4, **caractérisé en ce que** l'extrémité inférieure (12a) du dossier (7) représente au moins un élément de pied d'appui (7a) disposé au niveau du côté arrière du siège (14) pour l'appui du siège (1) contre la surface du sol (4).

6. Siège selon la revendication 4 ou 5, **caractérisé en ce que** le dossier (7) est rigide à la flexion et est conçu de manière continue, dans la direction de la hauteur (13), d'une extrémité supérieure (12b) jusqu'à l'extrémité inférieure (12a).

7. Siège selon l'une des revendications 4 à 6, **caractérisé en ce qu'**un rapport de longueur entre une première longueur (20), qui s'étend de l'extrémité supérieure (12b) du dossier (7) jusqu'à l'axe de pivotement (9), et une deuxième longueur (21), qui s'étend de l'extrémité inférieure (12a) du dossier (7) jusqu'à l'axe de pivotement (9) est dans l'intervalle de 1:1 à 3:1, de préférence dans l'intervalle de 1,8:1 à 2,2:1.

8. Siège selon l'une des revendications précédentes, **caractérisé en ce qu'**un cadre de partie d'assise, un cadre de dossier et un cadre d'accoudoir sont constitués chacun, de préférence d'une seule pièce, d'une matière plastique renforcée ou non par des fibres.

9. Siège selon l'une des revendications 5 à 8, **caractérisé en ce que** l'élément de pied d'appui (7a) est relié avec un dispositif à glissière courbe (11) pour le glissement de l'élément de pied d'appui (7a) le long d'une glissière courbe (15, 16) lors de la réalisation d'un mouvement de pivotement (18, 19) du dossier (7) par rapport à la partie d'assise (2) dans la direction vers l'avant et vers l'arrière du siège.

10. Siège selon la revendication 9, **caractérisé en ce que** le dispositif à glissière courbe (11) comprend un dispositif de blocage pour le blocage de l'élément de pied d'appui (7a) glissant le long de la glissière courbe (15, 16) par rapport à la glissière courbe (15, 16).
